(19) Europäisches Patentamt
European Patent Office
Office européen des brevets

(11) Publication number : 0 151 040 B2

(12) NEW EUROPEAN PATENT SPECIFICATION

(45) Date of publication of the new patent specification : 02.12.92 Bulletin 92/49

(51) Int. Cl.$^5$ : C08K 5/09, C08L 27/06

(21) Application number : 85300639.3

(22) Date of filing : 30.01.85

# (54) Polyvinyl chloride molding powder.

(30) Priority : 30.01.84 JP 16594/84
12.10.84 JP 214807/84

(43) Date of publication of application :
07.08.85 Bulletin 85/32

(45) Publication of the grant of the patent :
19.04.89 Bulletin 89/16

(45) Mention of the opposition decision :
02.12.92 Bulletin 92/49

(84) Designated Contracting States :
BE DE FR GB IT NL

(56) References cited :
US-A- 4 374 945
K. THINIUS: "Stabilisierung und Alterung von Plastwerkstoffen", Band I: Stabilisierung und Stabilisatoren vonPlastwerkstoffen", 1969, pages 217-224, Akademie Verlag, Berlin, DE
JP-A-71152/83, Chemical Abstracts, Vol. 99, 1983, Nr. 213724v

(56) References cited :
Jp-A-29848/77, Chemical Abstracts, Vol. 86, 1977, Nr. 172503h
JP-A-106748/78, Chemical Abstracts, Vol.90, 1979, Nr. 24259a
JP-A-36251/76, Chemical Abstracts, Vol.85, 1976, Nr. 34069z

(73) Proprietor : SUMITOMO CHEMICAL COMPANY, LIMITED
Kitahama 4-chome 5-33
Chuo-ku Osaka 541 (JP)

(72) Inventor : Matsuura, Isao
7-32, Funakicho
Ibaraki-shi Osaka-fu (JP)
Inventor : Kobayashi, Masanori
1-8-14, Okamoto Higashinada-ku
Kobe-shi Hyogo-ken (JP)
Inventor : Wakatsuki, Akira
2-1-132, Kuwatacho
Ibaraki-shi Osaka-fu (JP)

(74) Representative : Geering, Keith Edwin et al
REDDIE & GROSE 16 Theobalds Road
London WC1X 8PL (GB)

EP 0 151 040 B2

## Description

The present invention relates to a molded product of a polyvinyl chloride powder molding composition having polyurethane foam laminated thereto, e.g. for making covering material for automobile inner parts such as crash pads, arm rests, head rests, console boxes, meter covers and door trims. In recent years there has been increasing demand for latter such items of complicated shape which are light in weight, have embossed or stitched patterns, and are soft and high-quality to the touch.

Hitherto, there have been two kinds of polyvinyl chloride covering material, one being vacuum-formed from plasticized sheet composed mainly of polyvinyl chloride resin and ABS resin, and the other being rotationally molded-or slush-molded from paste sols composed mainly of polyvinyl chloride paste resin and plasticizer.

The vacuum-formed product meets the requirement for light weight, but is hard to the touch. Besides, it is extremely difficult to obtain vacuum-formed products of complicated shape having embossed or stitched patterns of high-quality feel. The vacuum-formed product also has the defect that, because of its large residual strain, cracks are easily formed during long-term use.

On the other hand, the sol molded product has a soft feel, but the sol, because of its low gelation temperature, rapidly melts in the mold so that phenomena such as flow mark, lip, stringiness of the sol, etc. appear. The sol molded product, therefore, has the defects that its inside surface lacks smoothness, that it may be too thick, and sol removal from the mold takes too long.

The sol also has the problems that a great deal of labor is required in cleaning tanks, pipes, etc. for color change, and that its viscosity changes with lapse of time so that it can not stand long-term storage.

In recent years, powder molding methods have attracted public attention as a means to solve these defects and problems.

The powder molding methods include fluidized bed coating, electrostatic coating, powder flame spray coating, powder rotational molding, powder slush molding and the like. A powder composition used in these techniques should be free-flowing and of good moldability.

It is well known to produce powder compositions by dry-blending polyvinyl chloride resins, plasticizers, stabilizers, pigments, fillers and auxiliaries etc. on blenders or high-speed rotating mixers equipped with a heating jacket.

It is also well known to add small amounts of polyvinyl chloride resin fine powders or inorganic fillers such as calcium carbonate fine powders, etc. in order to improve the flowability (Rubber Digest, Vol. 14, No. 8, 32-40; Polyvinyl Chloride-Its Chemistry and Industry-II, pp. 367-370, 1968; and Japanese Patent Publication No. 1575/1962).

In powder molding, since polyvinyl chloride powder compositions are molded in a mold kept at high temperatures, too great an importance has been put on the thermal resistance of the composition. As a result, it has been normal to use the same metal soap stabilizers as for common extrusion and calendering, i.e. the metal soaps of fatty acids having alkyl groups of not less than 9 carbon atoms, for example stearates [$C_{17}H_{35}COO$-], palmitates [$C_{15}H_{31}COO$-], laurates [$C_{11}H_{23}COO$-], caprates [$C_9H_{19}COO$-], etc. Powder molding is different from common extrusion and calendering in that the powder is brought into contact with the mold a high temperatures for only a short time, and that little shear is applied to the powder. The populary used stabilizers, comprising the metal soaps of fatty acids having alkyl groups of not less than 9 carbon atoms, are of a powdery form in many cases. In powder molding, however, we have found that such stabilizers are poor in dispersibility and, because of their high melting points, do not melt sufficiently but remain in part as powder.

Even when the above known stabilizers are well kneaded with liquids such as solvents, plasticizers, etc., compatibility with the PVC is poor and also the plate-out phenomenon occurs; when the mold has fine embossed or stitched surface patterns, occurrence of this plate-out phenomenon makes it very troublesome to remove stains from the mold.

It is now known to use in such powder compositions a stabiliser comprising the metal soap of a fatty acid having a $C_5$-$C_8$ alkyl group. Such a polyvinyl chloride powder molding composition is usually a dry blend with one or more of plasticizers, stabilizers, pigments and others such as fillers and auxiliaries added as need arises.

In the textbook, K. Thinius, "Stabilisierung und Alterung von Plastwerkstoffen" Vol. 1, 1969, Akademie Verlag Berlin, there is disclosed a combination of zinc-2-ethyl/hexanoate with a barium salt as stabiliser for PVC. The textbook refers generally to PVC containing barium and zinc fatty acid soap stabilisers selected from those of the formula:

$$(RCOO)_2Me$$

wherein R represents a $C_5$-$C_8$ alkyl group and Me represents barium and zinc.

The metal soaps of fatty acids having alkyl groups of not more than 8 carbon atoms, for example nonanoates [$C_8H_{17}COO$-], octanoates [$C_7H_{15}COO$-], heptanoates [$C_6H_{13}COO$-], hexanoates [$C_5H_{11}COO$-], etc., have less thermal resistance and lubricating action and are difficult to produce, and so are not generally used

in common extrusion and calendering-at least, not in the substantial absence of metal soap of fatty acid having an alkyl group of not less than 9 carbon atoms.

"Chemical Abstracts, vol.99, 1983, No.213724 v discloses that the low-temperature degradation or discoloring of Cl-containing resin bonded or contacted with polyurethane foam is reduced by incorporating inorganic or organic Zn compound and inorganic alkaline earth metal compound in the resin; a PVC sheet containing Ba, Ca and Zn stearates and $Mg(OH)_2$ was laminated to a foamed polyurethane sheet to give a product of longer discoloration time than the product without $Mg(OH)_2$."

The present invention uses a polyvinyl chloride powder molding composition including metal soap of a fatty acid having a $C_5$-$C_8$ alkyl group; the metal moiety of such soap is barium and zinc. Suitable barium-containing soaps include barium nonanoate, barium octanoate, barium heptanoate and barium hexanoate. Suitable zinc-containing soaps include zinc nonanoate, zinc octanoate, zinc heptanoate and zinc hexanoate.

In the present invention, the barium-containing and zinc-containing stabilizers are used in combination, preferably at a metal weight ratio of barium to zinc of 1:2 to 5:1.

When zinc is in excess relative to barium, e.g. this barium:zinc weight ratio is smaller than 1:2, there is danger of inadequate thermal resistance, formation of black specks and foaming of the molded covering material. Such weight ratio is not therefore preferred.

Contrary to this, when barium is in excess relative to zinc, e.g. this barium:zinc weight ratio is larger than 5:1, initial coloration on moulding tends to become strong, particularly a tendency to be colored red. As a result, since the color of the molded covering material deviates from that desired, color matching becomes difficult.

The amount of the barium- and zinc-containing stabilizer used is preferably from 0.1 to 10 parts by weight based on 100 parts by weight of polyvinyl chloride resin; when it is less than 0.1 part by weight, the thermal resistance may be inadequate; when it is more than 10 parts by weight, there is a danger of the stabilizer bleeding to the surface of the molded covering material, and the cost may increase to become uneconomic.

In order to provide as a final product a covering material for automobile inner parts, polyurethane can be formed in place on the inside surface of the molded covering material.

In this in situ polyurethane foaming, it is well known to use a first component composed mainly of polyol, water, foaming agent, catalyst and other auxiliaries, and a second component composed mainly of polyisocyanate.

In this polyurethane foaming, amine compounds are used as catalyst, e.g. ethylenediamine, triethylenediamine, triethylenetetramine, triethanolamine, etc; these may be used alone or in combination and as addition products with alkylene oxides such as ethylene oxide, propylene oxide, butylene oxide, epichlorhydrin, styrene oxide. These amine compounds, on contact with the polyvinyl chloride covering material, markedly promote discoloration and deterioration of the material.

Consequently, there has been a need for polyvinyl chloride powder molding compositions resistant to discoloration and deterioration by amine compounds (hereinafter referred to as amine resistance). We have found that our PVC powder molding composition is improved in amine resistance by inclusion of magnesium compound, in an amount of from 0.1 to 5 parts by weight per 100 parts by weight of polyvinyl chloride resin.

In the development of our polyvinyl chloride powder composition superior in amine resistance, we examined the thermal resistance (gear oven 110°C) and light fastness (sunshine weather-O-meter or fade-O-meter; black panel temperature, 83°C) of a two-layer sheet comprising the polyvinyl chloride covering material and polyurethane foamed in situ, and found that the zinc compound has an ability to prevent discoloration by amine compounds. We believe the reason for this to be as follows: in systems wherein a polyvinyl chloride resin and an amine compound coexist, dehydrochlorination is promoted or a complex compound is formed by reaction between the resin and the amine compound to develop a characteristic color; but when a zinc stabilizer is present in the system, another complex compound is formed from the stabilizer and the amine compound, and in this case, a complementary relationship applies between the colors of the complex compounds to produce a harmless color. The invention, however, is not bound by theory.

In the foregoing thermal resistance and light fastness tests on the polyvinyl chloride/polyurethane two-layer sheet described above, we sought a method to maintain the discoloration resistance for longer, and after extensive study found that amine resistance can be improved by including a magnesium compound. We also found that the use of magnesium compound is accompanied by improved maintenance of adhesion strength between the polyvinyl chloride covering material and polyurethane layer even after prolonged thermal resistance and light fastness tests.

"The present invention provides a molded product of a polyvinyl chloride powder molding composition containing a stabilizer comprising a mixture of barium and zinc fatty acid soaps selected from those of formula $(RCOO)_2Me$ wherein Me is barium and zinc and further including from 0.1 to 5 w/w %, based on the polyvinyl chloride, of magnesium compound stabilizer to improve the amine resistance compound stabilizer to improve the amine resistance of the composition, said product having polyurethane foam laminated thereto, characterised in that R is a $C_5$ to $C_8$ alkyl group and that said foam is formed in situ on a face of said product."

Suitable magnesium compounds for use in the present invention include for example magnesium oxide, magnesium hydroxide, magnesium phosphate, magnesium perchlorate, basic magnesium carbonate, magnesium/aluminum compounds (e.g. hydrotalcite) and the like. These compounds may be used alone or in combination.

When the amount of magnesium compound is less than 0.1 part by weight, the improvement in amine resistance and the adhesion strength of the polyvinyl chloride/polyurethane two-layer sheet after the aging tests may be insufficient.

When said amount is more than 5 parts by weight, the film strength of the polyvinyl chloride covering material may be insufficient, and the initial coloration of the material on molding tends to be strongly reddish, so that such amount is not preferred.

The stabilizers used in the present invention may be added when dry-blending the composition. In this, case, they may be added alone, or with one or more components selected from solvents, plasticizers, epoxy compounds, antioxidants, photostabilizers, ultraviolet absorbers, phosphorus chelaters, alcohols and pigments.

The stabilizers used in the present invention may be used with small amounts of other stabilizer or inorganic compound described below. Such other stabilizers are metal soaps other than those of fatty acids having an alkyl group of not less than 9 carbon atoms, and include for example calcium, magnesium, barium, zinc and aluminum metal soaps of monohydric carboxylic acids (e.g. benzoic acid, toluic acid, acetoxybenzoic acid) and dihydric carboxylic acids (e.g. oxalic acid, malonic acid, succinic acid, glutaric acid, adipic acid, sebacic acid, phthalic acid). The inorganic compounds include for example carbonates, phosphates, phosphites, silicates, calcium carbonate fine powder, aluminum hydroxide, alumina/silica sol, perchlorates and the like.

The polyvinyl chloride resins usable in the present invention include vinyl chloride homopolymers, copolymers of vinyl chloride with ethylene, propylene or vinyl acetate and graft copolymers of vinyl chloride with ethylene/vinyl acetate copolymer (EVA). These polymers and copolymers can be produced by suspension polymerization, bulk polymerization or emulsion polymerization, and they may be used alone or in combination. The polyvinyl chloride resins for the present invention are not limited to these polymers and copolymers.

As plasticizers for use in the present invention, there are given for example phthalic acid esters such as dibutyl phthalate, dioctyl phthalate, diisodecyl phthalate, diisoundecyl phthalate, etc.; trimellitic acid esters such as trioctyl trimellitate, tri-2-ethylhexyl trimellitate, tridecyl trimellitate, etc.; adipic acid esters such as dioctyl adipate, diisodecyl adipate, etc.; phosphoric acid esters such as tricresyl phosphate, trioctyl phosphate, etc.; epoxy plasticizers and liquid polyesters. The plasticizers suitable are not limited to these compounds.

As the polyol, catalyst, foaming agent, polyisocyanate, etc. for the in situ polyurethane foaming, the well known ones commonly used in the production of polyurethane foams are adequate.

In powder molding, a polyvinyl chloride powder composition is molded in a mold kept at high temperatures, so that the surface of the mold is gradually stained as the number of molding shots increases. Consequently, molding works must stop,operation temporarily for mold cleaning, as a result of which productivity is markedly reduced and extra labor is required for cleaning. When the mold is heavily stained, the molded covering material becomes difficult to detach from the mold, stains on the mold are transferred to the surface of the covering material, and in some cases, the thickness of the molded material becomes too great.

It is therefore very important industrially and economically to use polyvinyl chloride powder compositions which have resistance to mold staining.

It is an advantage that compositions used in the invention exhibit improved amine resistance, and also exhibit resistance to mold staining comparable to that obtainable with known compositions.

The present invention is illustrated specifically by the following Examples.

Comparative Example 1

To a 20-liter super-mixer was added 2 kg of a straight polyvinyl chloride resin having an average polymerization degree of 700 produced by conventional suspension polymerization (Sumilit® SX-7GL; produced by Sumitomo Chemical Co.). Separately from this, 25 g of barium octanoate and 25 g of zinc octanoate, 70 g of epoxidized soybean oil and 110 g of a gray pigment containing 3 g of a thioether antioxidant (Antigen® OS; produced by Sumitomo Chemical Co.) and 2 g of an ultraviolet absorber (Viosorb® 580; produced by Kyodo Yakuhin Co.) were thoroughly dispersed in 400 g of trioctyl trimellitate. This dispersion liquid and then 1 kg of trioctyl trimellitate were added to the super-mixer while stirring at a controlled revolution speed, and the mixture was dried by heating.

After cooling, the dried product was uniformly mixed with 200 g of a polyvinyl chloride paste resin fine powder produced by the micro-suspension method (Sumilit® PXQL; produced by Sumitomo Chemical Co.) to produce a powder composition of good flowability.

100 Grams of this powder composition was sprinkled for 10 seconds on a nickel mirror plate [100 mm×100 mm×3 mm thick] kept at 220°C on an electric hot plate. The mirror plate was then taken off the hot plate, and after removing the unmolten powder, the mirror plate having the molten resin attached thereto was again placed on the hot plate and heated for 30 minutes to complete fusion. After cooling and removing the formed sheet, the mirror plate was again placed on the hot plate and the above procedure was repeated five times. After the test, the degree of cloudiness of the mirror plate was examined to find that the plate had little cloudiness, showing a good appearance, i.e. no staining.

Comparative Example 2

A powder composition was prepared in the same manner as in Comparative Example 1 but using 120 g of a liquid comprising 60% of dodecylbenzene and as a stabilizer, 40% of barium/zinc octanoate previously adjusted to a barium:zinc metal weight ratio of 2:1. The Comparative Example 1 test was repeated five times on the same hot plate, and the degree of cloudiness of the nickel mirror plate examined; it was found that the plate had little cloudiness, precisely as in Comparative Example 1, showing a good appearance.

Example 1

A powder composition was prepared in the same manner as in Comparative Example 1 but using as a stabilizer 120 g of the barium/zinc octonoate used in Comparative Example 2 and 4 g of magnesium oxide. The stain test was repeated five times on the same hot plate, and the degree of cloudiness of the nickel mirror plate examined; it was found that the plate had little cloudiness, precisely as in Comparative Example 1.

Example 2

A powder composition was prepared in the same manner as in Comparative Example 1 but using as a stabilizer 120 g of the barium/zinc octanoate used in Comparative Example 2 and 4 g of magnesium hydroxide. The stain test was repeated five times on the same hot plate, and the degree of cloudiness of the nickel mirror plate examined; it was found that the plate had little cloudiness; precisely as in Comparative Example 1.

Example 3

A powder composition was prepared in the same manner as in Comparative Example 1 but using as a stabilizer 120 g of the barium/zinc octanoate used in Comparative Example 2, 4 g of magnesium hydroxide and 4 g of hydrotalcite (DHT-4; produced by Kyowa Kagaku Co.). The stain test was repeated five times on the same hot plate, and the degree of cloudiness of the nickel mirror plate examined; it was found that the plate had little cloudiness, precisely as in Comparative Example 1.

The powder compositions obtained in Examples 1 to 3 and Comparative Examples 1 and 2 were formed into sheets as described below, and the amine resistance was tested.

500 Grams of powder composition was sprinkled on an electroformed nickel plate with embossed pattern (300 mm×300 mm) kept at 220°C in a furnace wherein the atmospheric temperature was 300°C; and after 10 seconds the plate was taken from the furnace and the unmolten powder was removed. The plate having the molten powder attached thereto was again placed in the furnace and heated for one minute at an atmospheric temperature of 300°C to complete fusion. After cooling, the formed sheet was removed. The thickness of the sheet was 1 mm on average.

Thereafter, the formed sheet was placed, with its embossed surface downwards, on an aluminum support frame [300 mm×300 mm×10 mm thick] placed on an aluminum foaming plate. Separately from this, water, triethanolamine and triethylenediamine were added to polyol composed mainly of glycerin/propylene oxide and glycerin/ethylene oxide adducts to prepare a mixture. Into the above support frame were injected this mixture and polymeric MDI having an NCO content of 30.5% so that the total amount was 153 g and the weight ratio of former to latter was 100 parts to 50 parts by weight, whereby a polyurethane foam firmly adhered to the back surface of the sheet was obtained. This polyurethane foam had a thickness of 10 mm and a foam density of 0.16 g/cm$^3$.

This polyvinyl chloride/polyurethane two-layer sheet was cut into a desired size of 70 mm×150 mm to prepare a test sheet. Four pieces of the test sheet were placed in a gear oven wherein the atmosphere was kept at 110°C; one test piece was taken out every 100 hours, and a 400-hour thermal discoloration test was carried out. Similarly, four pieces of the test piece were placed in a Sunshine weather-O-meter, wherein the temperature of the black panel was adjusted to 83°C; one test piece was taken out every 100 hours, and a 400-hour photodiscoloration test was carried out. The resistance to thermal discoloration and photo-discoloration was expressed by grade using the gray scale.

TABLE 1

| | Amine resistance | |
|---|---|---|
| | Resistance to thermal discoloration (grade) | Resistance to photo-discoloration (grade) |
| Comparative Example 1 | 3 | 4—3 |
| Comparative Example 2 | 3 | 4—3 |
| Example 1 | 4 | 5—4 |
| Example 2 | 4 | 5—4 |
| Example 3 | 4 | 5—4 |

Note
Assessment of amine resistance:
Thermal resistance: Gear oven, 110°C×400 hours.
Light fastness: Sunshine weather-O-meter, 83°C×400 hours.
Assessment of discloration: according to the grades on the gray scale.

## Claims

1. A molded product of a polyvinyl chloride powder molding composition containing a stabilizer comprising a mixture of barium and zinc fatty acid soaps selected from those of the formula $(RCOO)_2Me$ wherein Me is barium and zinc and further including from 0.1 to 5 w/w %, based on the weight of polyvinyl chloride, of magnesium compound stabilizer to improve the amine resistance of the composition, said product having polyurethane foam laminated thereto, characterized in that R is a $C_5$-$C_8$ alkyl group and that said foam is formed in situ on a face of said product."

## Patentansprüche

1. Geformtes produkt aus einer Polyvinylchloridpulverformmasse, die einen Stabilisator aus einer Mischung aus Barium- und Zinkfettsäureseifen, ausgewählt aus denjenigen der Formel $(RCOO)_2Me$, worin Me Barium und Zink ist, enthält und die weiterhin 0,1 bis 5 % Gew./Gew., bezogen auf das Gewicht des polyvinylchlorids, an einer Magnesiumverbindung als Stabilisierungsmittel zur Verbesserung der Aminbeständigkeit der Masse enthält, und das produkt Polyurethanschaum auflaminiert enthält, dadurch gekennzeichnet, daß R eine $C_5$-$C_8$-Alkylgruppe ist und daß dieser Schaum in situ auf einer Seite dieses produktes gebildet ist.

## Revendications

1. Produit moulé constitué d'une composition de moulage à base de poudre de chlorure de polyvinyle contenant un stabilisant consistant en un mélange de savons de baryum et de zinc d'acides gras choisis entre ceux de formule $(RCOO)_2Me$ dans laquelle Me représente le baryum et le zinc, et comprenant en outre 0,1 à 5 % en poids/poids, sur la base du poids du chlorure de polyvinyle, d'un composé de magnésium servant de stabilisant destiné à améliorer la résistance aux amines de la composition, une mousse de polyuréthanne étant stratifiée audit produit, caractérisé en ce que R représente un groupe alkyle en $C_5$ à $C_8$ et ladite mousse est formée in situ sur une face dudit produit.